# EUROPEAN PATENT APPLICATION

(11) **EP 4 541 525 A1**
(43) Date of publication of application: **23.04.2025**
(21) Application number: 23823230.0
(22) Date of filing: 15.06.2023
(51) Int. Cl.: B25J 15/06

(54) **METHOD FOR POSITIONING CENTER OF HEAT PRESERVATION COVER OF TORPEDO LADLE, AND METHOD FOR POSITIONING CENTER OF LADLE MOUTH OF TORPEDO LADLE**

(30) Priority: 17.06.2022 CN 202210683980
(71) Applicant: BAOSHAN IRON & STEEL CO., LTD., Shanghai 201900 (CN)
(72) Inventor: HUANG, Tianmao, Shanghai 201900 (CN); SHEN, Chen, Shanghai 201900 (CN); WU, Ruimin, Shanghai 201900 (CN)
(74) Representative: Santarelli
(86) International application number: PCT/CN2023/100487
(87) International publication number: WO 2023/241664

(57) **Abstract**

The present invention discloses a method for locating the center of a thermal insulation cover of a torpedo tank and the center of a tank opening. The method for locating the center of a thermal insulation cover of a torpedo tank of the present invention includes: arranging a contour scanning instrument; controlling the contour scanning instrument to scan the thermal insulation cover, and obtaining coordinate positions of three or more points on a circumferential contour of the thermal insulation cover; and determining a coordinate position of the center of the thermal insulation cover according to the obtained coordinate positions of the points on the circumferential contour of the thermal insulation cover. The method for locating the center of a tank opening of a torpedo tank of the present invention includes: arranging a contour scanning instrument; controlling the contour scanning instrument to scan the tank opening of the torpedo tank, and obtaining coordinate positions of three or more points on the circumferential contour of the tank opening of the torpedo tank; and determining a coordinate position of the center of the tank opening of the torpedo tank according to the obtained coordinate positions of the points on the circumferential contour of the tank opening of the torpedo tank. The method for locating the center of a thermal insulation cover of a torpedo tank and the center of the tank opening of the present invention can accurately locate the center of the thermal insulation cover and the center of the tank opening of the torpedo tank, and it is simple and convenient to implement the method.

## Description

### Technical field

The invention relates to covering and positioning technologies of a thermal insulation cover of a torpedo tank, in particular to a method for locating the center of a thermal insulation cover of a torpedo tank and the center of a tank opening.

### Background

A torpedo tank is a device used to hold and transport molten iron. A torpedo tank is usually loaded on a special rail transport trolley. This rail transport trolley loaded with a torpedo tank is called a torpedo tank car. In large-scale integrated iron and steel enterprises, the main function of a torpedo tank car is to transport molten iron smelted from the blast furnace of the ironmaking plant to the steelmaking plant. There is a tank opening on the top of the torpedo tank, and the molten iron enters and exits the torpedo tank through the tank opening. At present, before the torpedo tank car transports molten iron away from the ironmaking plant or before the torpedo tank car leaves the steelmaking plant on a return trip, a thermal insulation cover is added to the tank opening of the torpedo tank. The purpose is to reduce the energy consumption and exhaust gas emissions of the torpedo tank car during the round-trip transportation process.

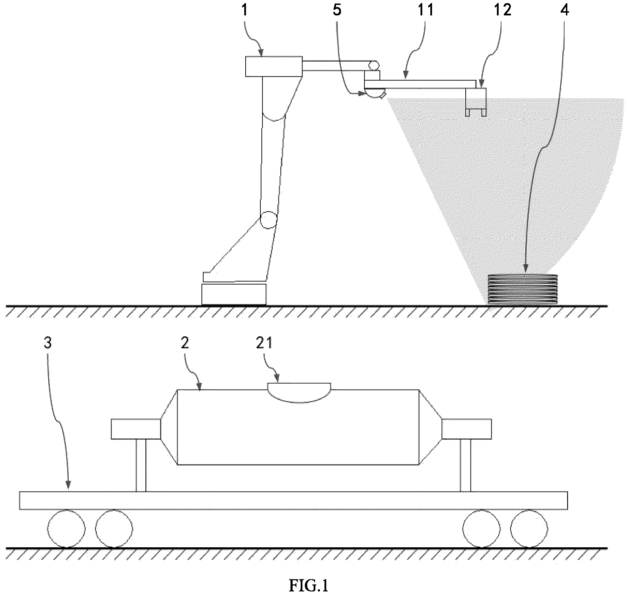

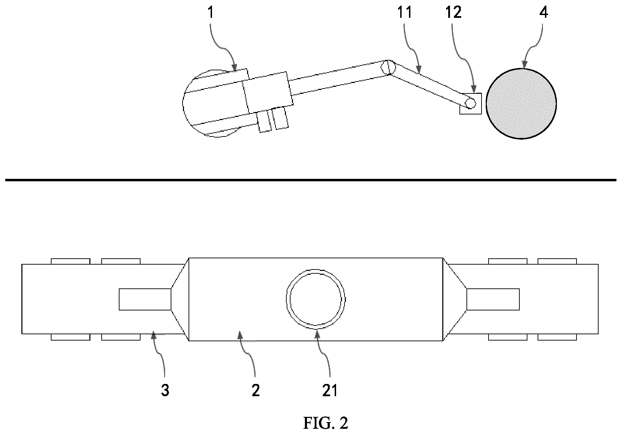

Referring to FIGS. 1 and 2 (except for the two-dimensional laser radar 5, all other equipment is prior art), taking an iron and steel enterprise as an example, a manipulator device 1 is provided at both ends of a transportation line of the torpedo tank car (an ironmaking plant and a steelmaking plant), the manipulator device 1 has a cantilever 11 that can move flexibly, and an electromagnetic suction cup 12 is also provided on the free end of the cantilever 11. With the cantilever 11 and the electromagnetic suction cup 12 thereon, the manipulator device 1 can flexibly absorb, pick up and move the thermal insulation cover 4. The manipulator device 1 is provided on a higher working platform, and the working platform is higher than the height of the torpedo tank 2 on the torpedo tank car 3. Some thermal insulation covers 4 are neatly stacked next to the manipulator device 1, and these insulation covers 4 stacked together are called a thermal insulation cover stack. Whenever the torpedo tank car 3 is about to leave, the manipulator device 1 picks up the thermal insulation cover 4 on the thermal insulation cover stack and cover a tank opening 21 of the torpedo tank 2 with the thermal insulation cover 4.

When the manipulator device 1 picks up the thermal insulation cover 4, the electromagnetic suction cup 12 should pick up the center of the thermal insulation cover 4 as much as possible. Otherwise, the center of gravity of the picked-up thermal insulation cover 4 will be offset, and the manipulator device 1 cannot reliably pick up the thermal insulation cover 4. When the manipulator device 1 covers the tank opening 21 of the torpedo tank with the picked-up thermal insulation cover 4, covering should be performed by aligning the thermal insulation cover 4 with the center of the tank opening 21 of the torpedo tank as much as possible. Otherwise, the tank opening 21 of the torpedo tank cannot be completely covered with the thermal insulation cover 4, and in severe cases, the thermal insulation cover 4 may even fall abnormally.

In the prior art, there are two main ways to locate the center of the thermal insulation cover 4 and the center of the tank opening 21 of the torpedo tank 2, one is to locate by visual image recognition, and the other is to locate by detecting the temperature of the torpedo tank 2.

Chinese patent (CN110378957A) discloses a metallurgical operation-oriented torpedo tank car visual identification and positioning method and system thereof, and specifically discloses the use of visual sensors to take photos and samples of the thermal insulation cover and the tank opening, extract feature data and obtain target features, and then obtain the plane center coordinates of the thermal insulation cover and the tank opening by fitting the target features. This method utilizes machine vision imaging. However, when the features of the tank opening are processed in this way, the detection data is easily affected by the high temperature and dust of the tank opening, which increases the difficulty of data processing.

Chinese patent (CN107200044A) discloses a method for positioning a molten iron torpedo tank car, and specifically discloses the positioning of the molten iron torpedo tank car by non-contact sensing of the temperature of the torpedo tank body target. The disadvantage of this method is as follows: because the temperature difference between a certain area inside and outside the tank opening wall is not large, the scanning hot metal detector may trigger the action in advance in the local range outside the tank opening wall. Therefore, positioning accuracy of this positioning method is not high, and only rough positioning can be performed.

### Summary

An objective of the present invention is to provide a method for locating the center of a thermal insulation cover of a torpedo tank and the center of a tank opening, the method for locating the center of a thermal insulation cover of a torpedo tank and the center of a tank opening can accurately locate the center of the thermal insulation cover of the torpedo tank and the center of the tank opening of the torpedo tank, and it is simple and convenient to implement the method.

In order to achieve the above technical objective, the present invention adopts the following technical solution:
A method for locating the center of a thermal insulation cover of a torpedo tank is provided, a manipulator device is arranged beside a transportation line of a torpedo tank car, and the manipulator device has a movable cantilever; and the method for locating the center of a thermal insulation cover of a torpedo tank includes:
S1, arranging a contour scanning instrument on the cantilever of the manipulator device;
S2, controlling the contour scanning instrument to scan the thermal insulation cover of the torpedo tank, and obtaining coordinate positions of three or more points on a circumferential contour of the thermal insulation cover of the torpedo tank; and
S3, determining a coordinate position of the center of the thermal insulation cover of the torpedo tank according to the coordinate positions of the points on the circumferential contour of the thermal insulation cover of the torpedo tank.

Further, the contour scanning instrument is a two-dimensional laser radar.

Further, a line scanning plane of the two-dimensional laser radar is perpendicular to a horizontal plane.

Further, in S2, the scanning performed on the thermal insulation cover of the torpedo tank by the contour scanning instrument is off-center scanning performed for two times in different directions, coordinate positions of two points on the circumferential contour of the thermal insulation cover of the torpedo tank are obtained by performing off-center scanning each time, and coordinate positions of four points on the circumferential contour of the thermal insulation cover of the torpedo tank are obtained by performing off-center scanning for two times.

Further, in S3, a coordinate position of the center of the thermal insulation cover of the torpedo tank is determined according to a double chord circle center determining method.

A method for locating the center of a tank opening of a torpedo tank is provided, a manipulator device is arranged beside a transportation line of a torpedo tank car, and the manipulator device has a movable cantilever; and the method for locating the center of a torpedo tank opening includes:
S1, arranging a contour scanning instrument on the cantilever of the manipulator device;
S2, controlling the contour scanning instrument to scan the tank opening of the torpedo tank, and obtaining coordinate positions of three or more points on a circumferential contour of the tank opening of the torpedo tank; and
S3, determining a coordinate position of the center of the tank opening of the torpedo tank according to the obtained coordinate positions of the points on the circumferential contour of the tank opening of the torpedo tank.

Further, the contour scanning instrument is a two-dimensional laser radar.

Further, a line scanning plane of the two-dimensional laser radar is perpendicular to a horizontal plane.

Further, in S2, the scanning of the tank opening of the torpedo tank by the contour scanning instrument is off-center scanning performed for two times in different directions, coordinate positions of two points on the circumferential contour of the tank opening of the torpedo tank are obtained by performing off-center scanning each time, and coordinate positions of four points on the circumferential contour of the tank opening of the torpedo tank are obtained by performing off-center scanning for two times.

Further, in S3, a coordinate position of the center of the torpedo tank opening is determined according to a double chord circle center determining method.

In the method for locating the center of a thermal insulation cover of a torpedo tank and the center of a tank opening of the present invention, the contour scanning instrument is controlled to scan the thermal insulation cover and the tank opening of the torpedo tank, and coordinate positions of three or more points on the circumferential contour of the thermal insulation cover and the tank opening of the torpedo tank are obtained, and then the coordinate positions of the center of the thermal insulation cover and the center of the tank opening of the torpedo tank can be accurately located according to the coordinate positions of the obtained points, that is, the accurate positioning of the center of the thermal insulation cover and the center of the tank opening of the torpedo tank is achieved.

Compared with the prior art, the method for locating the center of a thermal insulation cover of a torpedo tank and the center of an tank opening of the present invention has the following beneficial effects: the method for locating the center of a thermal insulation cover and the center of a tank opening of the present invention can accurately locate the center of the thermal insulation cover and the center of the tank opening of the torpedo tank, so that the manipulator device can accurately pick up the center of the thermal insulation cover, and the tank opening of the torpedo tank can be accurately covered with the picked-up thermal insulation cover, thereby preventing the center of gravity of the picked-up thermal insulation cover from shifting, ensuring that the manipulator device reliably picks up the thermal insulation cover, avoiding a situation in which the tank opening of the torpedo tank cannot be completely covered with the thermal insulation cover, and avoiding a situation in which the thermal insulation cover falls abnormally. In addition, during the implementation of the method, the amount of data that needs to be processed is very small, and it is simple and convenient to implement the method.

### Brief description of drawings

FIG. 1 is a schematic diagram of a manipulator device and a torpedo tank car involved in a method for locating the center of a thermal insulation cover of a torpedo tank of the present invention;
FIG. 2 is a top view of a manipulator device and a torpedo tank car;
FIG. 3 is a schematic diagram of a two-dimensional laser radar scanning a thermal insulation cover;
FIG. 4 is a schematic diagram of a two-dimensional laser radar scanning a tank opening of a torpedo tank;
FIG. 5 is a schematic diagram of a thermal insulation cover of a torpedo tank and a tank opening of a torpedo tank being rectangular; and
FIG. 6 is a schematic diagram of a thermal insulation cover torpedo tank and a tank opening of a torpedo tank being of any shape.

In the figures: 1-manipulator device, 11-cantilever, 12-electromagnetic suction cup, 2-torpedo tank, 21-tank opening, 3-torpedo tank car, 4-thermal insulation cover, 5-two-dimensional laser radar.

### Detailed description of embodiments

The present invention is further described below with reference to the accompanying drawings and specific embodiments:

### Embodiment 1:

Referring to FIGS. 1 to 3, this embodiment 1 provides a method for locating a center of a thermal insulation cover of a torpedo tank, the method for locating a center of a thermal insulation cover of a torpedo tank can accurately locate the center of the thermal insulation cover of the torpedo tank, and it is simple and convenient to implement the method.

Referring to FIGS. 1 and 2, in the method for locating a center of a thermal insulation cover of a torpedo tank of this embodiment 1, the implementation scenario is an ironmaking plant of a steel company. A manipulator device 1 is provided next to a transportation line of the torpedo tank of the ironmaking plant. The manipulator device 1 has a cantilever 11 that can move flexibly, and an electromagnetic suction cup 12 is further provided on the free end of the cantilever 11. With the cantilever 11 and the electromagnetic suction cup 12 thereon, the manipulator device 1 can flexibly absorb, pick up and move the thermal insulation cover 4. The manipulator device 1 is provided on a higher working platform, and the working platform is higher than the height of the torpedo tank 2 on the torpedo tank car 3. Some thermal insulation covers 4 are neatly stacked next to the manipulator device 1, and these insulation covers 4 stacked together are called a thermal insulation cover stack. Whenever the torpedo tank car 3 is about to leave, the manipulator device 1 picks up the thermal insulation cover 4 on the thermal insulation cover stack and cover a tank opening 21 of the torpedo tank 2 with the thermal insulation cover 4.

The method for locating a center of a thermal insulation cover of this embodiment 1 includes the following S1 to S3.

S1: Referring to FIGS. 1 and 2, a two-dimensional laser radar 5 is added to the cantilever 11 of the manipulator device 1, and the two-dimensional laser radar 5 can move flexibly with the cantilever 11. The orientations of the two-dimensional laser radar 5 and the cantilever 11 in the horizontal direction are consistent, that is, the two-dimensional laser radar 5 and the cantilever 11 are oriented toward a same direction. When the cantilever 11 is oriented toward the thermal insulation cover 4 in the horizontal direction, the two-dimensional laser radar 5 can scan the thermal insulation cover 4. In this embodiment 1, a line scanning plane of the two-dimensional laser radar 5 (refer to the gray sector in FIG. 1) is perpendicular to a horizontal plane, which is conducive to scanning and obtaining points on the circumferential contour of the thermal insulation cover 4.

The two-dimensional laser radar 5 is a contour scanning instrument of the prior art, and has a function of scanning the contour of an object. The scanning laser emitted by the two-dimensional laser radar 5 has strong penetrating power, and therefore the two-dimensional laser radar 5 has the advantage of not being affected by dust and high temperature. The line scanning plane of the two-dimensional laser radar 5 is a concept of the prior art, and can be understood as a plane scanned by the laser scanning line emitted by the two-dimensional laser radar 5. The gray sector in FIG. 1 represents the line scanning plane of the two-dimensional laser radar 5.

S2: Before the torpedo tank car 3 filled with molten iron goes to the steelmaking plant, the manipulator device 1 picks up a thermal insulation cover 4 from the thermal insulation cover stack and covers the tank opening 21 of the torpedo tank 2 with the thermal insulation cover 4. Before the manipulator device 1 picks up the thermal insulation cover 4, the two-dimensional laser radar 5 is controlled to scan the thermal insulation cover 4 and obtain coordinate positions of four points on the circumferential contour of the thermal insulation cover 4.

The "controlling the two-dimensional laser radar 5 to scan the thermal insulation cover 4 and obtaining coordinate positions of four points on the circumferential contour of the thermal insulation cover 4" specifically includes: the two-dimensional laser radar 5 is controlled to perform off-center scanning on the thermal insulation cover 4 for two times in different directions, coordinate positions of two points on the circumferential contour of the thermal insulation cover 4 are obtained by performing off-center scanning each time, and the coordinate positions of the four points on the circumferential contour of the thermal insulation cover 4 can be obtained by performing off-center scanning for two times.

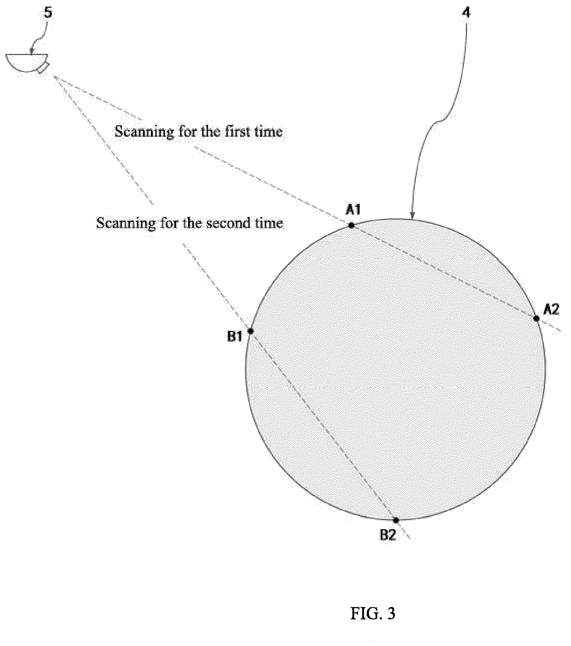

Referring to FIG. 3, more specifically, the "controlling the two-dimensional laser radar 5 to scan the thermal insulation cover 4 and obtaining coordinate positions of four points on the circumferential contour of the thermal insulation cover 4" specifically includes: the two-dimensional laser radar 5 is controlled to face (the cantilever 11 is controlled to face) one side of the thermal insulation cover 4 away from the center, and then the two-dimensional laser radar 5 is controlled to scan the thermal insulation cover 4 for the first time, that is, off-center scanning is performed for the first time, and the coordinate positions of two points on the circumferential contour of the thermal insulation cover 4 (that is, point A1 and point A2 in FIG. 3) are obtained by performing off-center scanning for the first time; then, the two-dimensional laser radar 5 is controlled to turn (the cantilever 11 is controlled to turn), so that the two-dimensional laser radar 5 faces the other side of the thermal insulation cover 4 away from the center, and then the two-dimensional laser radar 5 is controlled to scan the thermal insulation cover 4 again, that is, off-center scanning is performed for the second time, and the coordinate positions of another two points on the circumferential contour of the thermal insulation cover 4 (that is, point B1 and point B2 in FIG. 3) are obtained by performing off-center scanning for the second time, and the coordinate positions of the four points on the circumferential contour of the thermal insulation cover 4 are obtained by performing off-center scanning for two times. The two dotted lines in FIG. 3 represent that scanning is performed on the thermal insulation cover 4 by the two-dimensional laser radar 5 for two times.

It should be noted that the two-dimensional laser radar 5 is a device of the prior art, the method of using the two-dimensional laser radar 5 to scan the thermal insulation cover 4 to obtain the coordinate position of the point on the circumferential contour of the thermal insulation cover 4 is the prior art, and the implementation of this method should be known to the person skilled in the art.

It should be noted that the off-center scanning mentioned in this article refers to that the two-dimensional laser radar 5 performs scanning on the portion of the thermal insulation cover 4 (that is, the scanned target object) away from the central area (that is, the center area of the circle).

It should be noted that the position of the thermal insulation cover stack is pre-set, that is, the coordinate position of the center of the thermal insulation cover 4 on the thermal insulation cover stack can be roughly located. Therefore, a reference center coordinate position is pre-set for the center of the thermal insulation cover 4, and data of the reference center coordinate position is pre-set in a main control module of the manipulator device 1. When controlling the two-dimensional laser radar 5 to perform off-center scanning on the thermal insulation cover 4, the reference center coordinate position is used as a reference.

In addition, in this embodiment 1, the two-dimensional laser radar 5 is installed on the cantilever 11 of the manipulator device 1, and the orientation of the two-dimensional laser radar 5 is consistent with the orientation of the cantilever 11. Therefore, controlling the orientation of the two-dimensional laser radar 5 is actually controlling the orientation of the cantilever 11.

The circumferential contour of the thermal insulation cover 4 mentioned in this article refers to the contour of the circular periphery of the thermal insulation cover 4.

S3: The coordinate position of the center of the thermal insulation cover 4 is determined according to the obtained coordinate positions of the four points on the circumferential contour of the thermal insulation cover 4, so as to achieve accurate locating of the center of the thermal insulation cover 4. On the basis of accurately locating the center of the thermal insulation cover 4, the manipulator device 1 can accurately pick up the central part of the thermal insulation cover 4.

The "determining the coordinate position of the center of the thermal insulation cover 4 according to the obtained coordinate positions of the four points on the circumferential contour of the thermal insulation cover 4" is based on the "double chord center determining method", that is, the basic principle of analytic geometry "the intersection of the perpendicular bisectors of two non-parallel chords of a circle is the center of the circle".

Referring to FIG. 3, specifically, the four points on the circumferential contour of the thermal insulation cover 4 are the four points A1, A2, B1, and B2 in FIG. 3. The line connecting the points A1 and A2 is a chord of the circumferential contour of the thermal insulation cover 4, and the line connecting the points B1 and B2 is another chord of the circumferential contour of the thermal insulation cover 4. Then, the perpendicular bisectors of the two chords are determined, and the intersection of the perpendicular bisectors of the two chords can be determined as the center of the thermal insulation cover 4 (that is, the center of the circumferential contour of the thermal insulation cover 4).

It should be noted that the process of determining the chord, the perpendicular bisector of the chord, and the intersection of the perpendicular bisectors is essentially a calculation process of analytic geometry. There are many routines for such analytic geometry calculation, but no matter what kind of routine, it is common sense known to the person skilled in the art.

In this embodiment 1, the position of the center of the thermal insulation cover 4 is determined based on four points, while in other embodiments, the position of the center of the thermal insulation cover 4 can also be determined based on three points. According to the principle of analytic geometry, three points can determine a circle. More specifically, if a chord is drawn between every two of the three points, then three chords of the circumferential contour of the thermal insulation cover 4 can be determined, and the intersection of the perpendicular bisectors of any two of the chords can be determined as the center of the thermal insulation cover 4. Further expanded on the basis of the method for locating the center of a thermal insulation cover of this embodiment 1, the present application does not limit the specific times for which the two-dimensional laser radar 5 performs scanning. As long as the two-dimensional laser radar 5 is controlled to scan and obtain the coordinate positions of three or more points on the circumferential contour of the thermal insulation cover 4, the coordinate position of the center of the thermal insulation cover 4 can be determined based on these points and according to the "double chord center determining method". In this embodiment 1, all the coordinate positions mentioned are the coordinate positions based on the basic coordinate system of the manipulator device 1, and after the two-dimensional laser radar 5 is pre-calibrated, the coordinate data obtained by the two-dimensional laser radar 5 through scanning is the coordinate data based on the basic coordinate system of the manipulator device 1. In other embodiments, the coordinate positions may also be based on another coordinate system, such as a work area coordinate system (a coordinate system specifically used for locating in the work area) or a basic coordinate system of the two-dimensional laser radar 5, as long as all the coordinate positions are based on the same coordinate system. In addition, in this embodiment 1, the locating of the center of the thermal insulation cover 4 is essentially the locating of the horizontal plane coordinates, and therefore the coordinate positions mentioned are all horizontal plane coordinate data that ignore the vertical coordinate data, that is, the vertical coordinate data is not considered in the process of "determining the coordinate position of the center of the thermal insulation cover 4 according to the coordinate position of the point on the circumferential contour of the thermal insulation cover 4".

In this embodiment 1, a two-dimensional laser radar 5 is used to scan and obtain the coordinate position of the point on the circumferential contour of the thermal insulation cover 4. In other embodiments, other forms of contour scanning instruments can also be used to implement the function of the two-dimensional laser radar 5, as long as the coordinate position of the point on the circumferential contour of the thermal insulation cover 4 can be scanned.

It should be noted that the method for locating the center of the thermal insulation cover of the torpedo tank in this embodiment 1 is set in the form of a program in the main control module of the manipulator device 1. Before the manipulator device 1 controls to pick up the thermal insulation cover 4, the main control module of the manipulator device 1 executes the program to implement the method for locating the center of the thermal insulation cover of the torpedo tank in this embodiment 1, thereby determining the center of the thermal insulation cover 4.

### Embodiment 2:

Referring to FIGS. 1, 2 and 4, this embodiment 2 provides a method for locating a center of a tank opening of a torpedo tank. The basic concept of the method for locating the center of the tank opening is consistent with the method for locating the center of the thermal insulation cover in embodiment 1, and both methods use the double chord center determining method to determine the center of the circumferential contour. In this embodiment 2, a target object for determining the center of the circle is the tank opening 21 of the torpedo tank 2. The method for locating the center of the tank opening of the torpedo tank in this embodiment 2 can accurately locate the center of the tank opening of the torpedo tank, and it is simple and convenient to implement the method.

Referring to FIGS. 1 and 2, the method for locating the center of the tank opening of the torpedo tank in this embodiment 2 has the same implementation scenario as embodiment 1.

The method for locating the center of the tank opening of the torpedo tank in this embodiment 2 includes the following S1 to S3.

S1: Referring to FIGS. 1 and 2, a two-dimensional laser radar 5 is added to the cantilever 11 of the manipulator device 1, and the two-dimensional laser radar 5 is consistent with the two-dimensional laser radar 5 in embodiment 1.

S2: Before the torpedo tank car 3 filled with molten iron goes to the steelmaking plant, the manipulator device 1 picks up a thermal insulation cover 4 from the thermal insulation cover stack and covers the tank opening 21 of the torpedo tank with the thermal insulation cover 4. Before the manipulator device 1 covers the tank opening 21 of the torpedo tank 2 with the picked-up thermal insulation cover 4, the two-dimensional laser radar 5 is controlled to scan the tank opening 21 of the torpedo tank 2 to obtain coordinate positions of four points on the circumferential contour of the tank opening 21 of the torpedo tank 2.

The "controlling the two-dimensional laser radar 5 to scan the tank opening 21 of the torpedo tank 2 to obtain coordinate positions of four points on the circumferential contour of the tank opening 21 of the torpedo tank 2" specifically includes: the two-dimensional laser radar 5 is controlled to scan the tank opening 21 of the torpedo tank 2 for two times in different directions, coordinate positions of two points on the circumferential contour of the tank opening 21 of the torpedo tank 2 are obtained by performing off-center scanning each time, and the coordinate positions of the four points on the circumferential contour of the tank opening 21 of the torpedo tank 2 can be obtained by performing off-center scanning for two times.

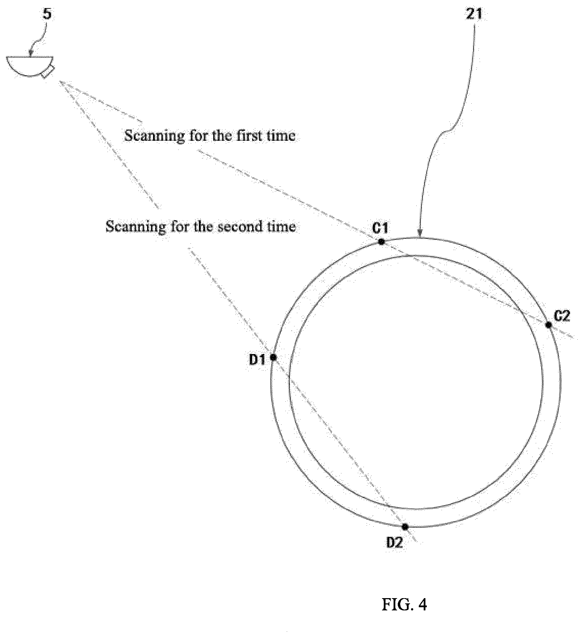

Referring to FIG. 4, more specifically, the "controlling the two-dimensional laser radar 5 to scan the tank opening 21 of the torpedo tank 2 to obtain coordinate positions of four points on the circumferential contour of the tank opening 21 of the torpedo tank 2" specifically includes: the two-dimensional laser radar 5 is controlled to face (the cantilever 11 is controlled to face) one side of the tank opening 21 of the torpedo tank 2 away from the center, and then the two-dimensional laser radar 5 is controlled to scan the tank opening 21 of the torpedo tank 2 for the first time, that is, off-center scanning is performed for the first time, and coordinate positions of two points on the circumferential contour of the tank opening 21 of the torpedo tank 2 (that is, points C1 and C2 in FIG. 4) are obtained by performing off-center scanning for the first time; then the two-dimensional laser radar 5 is controlled to turn (the cantilever 11 is controlled to turn), so that the two-dimensional laser radar 5 to face the other side of the tank opening 21 of the torpedo tank 2 away from the center, and then the two-dimensional laser radar 5 is controlled to scan the tank opening 21 of the torpedo tank 2 again, that is, off-center scanning is performed for the second time, and coordinate positions of the other two points on the circumferential contour of the tank opening 21 of the torpedo tank 2 (that is, point D1 and point D2 in FIG. 4) are obtained again by performing off-center scanning for the second time, and the coordinate positions of the four points on the circumferential contour of the tank opening 21 of the torpedo tank 2 are obtained by performing off-center scanning for two times. The two dotted lines in FIG. 4 represent that off-center scanning is performed on the tank opening 21 of the torpedo tank 2 by the two-dimensional laser radar 5 for two times.

It should be noted that the two-dimensional laser radar 5 is a device of the prior art. the method of using the two-dimensional laser radar 5 to scan the tank opening 21 0f the torpedo tank 2 to obtain the coordinate position of the point on the circumferential contour of the tank opening 21 0f the torpedo tank 2 is the prior art, and the implementation of this method should be known to the person skilled in the art.

It should be noted that the off-center scanning mentioned in this article refers to hat the two-dimensional laser radar 5 performs scanning on the portion of the tank opening 21 of the torpedo tank 2 (that is, the scanned target object) away from the central area (that is, the center area of the circle).

It should be noted that the position of the tank opening 21 of the torpedo tank 2 is predetermined, that is, the coordinate position of the center of the tank opening 21 of the torpedo tank 2 can be roughly located, and therefore a reference center coordinate position is pre-set for the center of the tank opening 21 of the torpedo tank 2, and data of the reference center coordinate position is pre-set in a main control module of the manipulator device 1. When controlling the two-dimensional laser radar 5 to perform off-center scanning on the tank opening 21 of the torpedo tank 2, the reference center coordinate position is used as a reference.

In addition, in this embodiment 2, the two-dimensional laser radar 5 is installed on the cantilever 11 of the manipulator device 1, and the orientation of the two-dimensional laser radar 5 is consistent with the orientation of the cantilever 11. Therefore, controlling the orientation of the two-dimensional laser radar 5 is actually controlling the orientation of the cantilever 11.

The circumferential contour of the tank opening 21 of the torpedo tank 2 mentioned in this article refers to the contour of the circular periphery of the tank opening 21 of the torpedo tank 2.

S3: The coordinate position of the center of the tank opening 21 of the torpedo tank 2 is determined according to the coordinate positions of the four points on the circumferential contour of the tank opening 21 of the torpedo tank 2, so as to accurately locate the center of the tank opening 21 of the torpedo tank 2. On the basis of accurately locating the center of the tank opening 21 of the torpedo tank, the manipulator device 1 can accurately cover the tank opening 21 of the torpedo tank 2 with the picked-up thermal insulation cover 4.

Like the method for locating the center of the thermal insulation cover of embodiment 1, the "determining the coordinate position of the center of the tank opening 21 of the torpedo tank 2 according to the coordinate positions of the four points on the circumferential contour of the tank opening 21 of the torpedo tank 2" is also based on the "double chord center determining method".

Referring to FIG. 4, specifically, the four points on the circumferential contour of the tank opening 21 of the torpedo tank 2 are the four points C1, C2, D1, and D2 in FIG. 4. The line connecting the points C1 and C2 is a chord of the circumferential contour of the tank opening 21 of the torpedo tank 2, and the line connecting the points D1 and D2 is another chord of the circumferential contour of the tank opening 21 of the torpedo tank 2. Then, the perpendicular bisectors of the two chords are determined, and the intersection of the perpendicular bisectors of the two chords can be determined as the center of the tank opening 21 of the torpedo tank 2 (that is, the center of the circumferential contour of the tank opening 21 of the torpedo tank 2).

It should be noted that the process of determining the chord, the perpendicular bisector of the chord, and the intersection of the perpendicular bisectors is essentially a calculation process of analytical geometry. There are many routines for such analytical geometry calculation, but no matter what routine, it is common sense known to the person skilled in the art.

In this embodiment 2, the position of the center of the tank opening 21 of the torpedo tank 2 is determined based on four points, while in other embodiments, the position of the center of the tank opening 21 of the torpedo tank 2 can also be determined based on three points. According to the principle of analytic geometry, three points can determine a circle. More specifically, if a chord is drawn between every two of the three points, then the three chords of the circumferential contour of the tank opening 21 of the torpedo tank 2 can be determined, and the intersection of the perpendicular bisectors of any two of the chords can be determined as the center of the tank opening 21 of the torpedo tank 2. Further expanded on the basis of the method for locating the center of a tank opening of this embodiment 2, the present application does not limit the specific times for which the two-dimensional laser radar 5 performs scanning. As long as the two-dimensional laser radar 5 is controlled to scan and obtain the coordinate positions of three or more points on the circumferential contour of the tank opening 21 of the torpedo tank 2, the coordinate position of the center of the tank opening 21 of the torpedo tank 2 can be determined based on these points and the "double chord circle center determining method".

In this embodiment 2, all the coordinate positions mentioned are based on the coordinate positions based on the basic coordinate system of the manipulator device 1, and after the two-dimensional laser radar 5 is pre-calibrated, the coordinate data obtained by the two-dimensional laser radar 5 through scanning is the coordinate data based on the basic coordinate system of the manipulator device 1. In other implementations, the coordinate position may also be based on another coordinate system, such as a work area coordinate system, a basic coordinate system of the two-dimensional laser radar 5, as long as all the coordinate positions are based on the same coordinate system. In addition, in this embodiment 2, the locating of the center of the tank opening 21 of the torpedo tank 2 is essentially the locating of the horizontal plane coordinates, and therefore the coordinate positions mentioned are all horizontal plane coordinate data that ignore the vertical coordinate data, that is, the vertical coordinate data is not considered in the process of "determining the coordinate position of the center of the tank opening 21 of the torpedo tank 2 according to the coordinate position of the point on the circumferential contour of the tank opening 21 of the torpedo tank 2".

In this embodiment 2, the two-dimensional laser radar 5 is used to scan and obtain the coordinate position of the point on the circumferential contour of the tank opening 21 of the torpedo tank 2, and in other embodiments, other forms of contour scanning instruments can also be used to implement the function of the two-dimensional laser radar 5, as long as other forms of contour scanning instruments can scan and obtain the coordinate position of the point on the circumferential contour of the tank opening 21 of the torpedo tank 2.

It should be noted that the method for locating the center of the tank opening of this embodiment 2 is set in the form of a program in the main control module of the manipulator device 1. Before the manipulator device 1 covers the tank opening 21 of the torpedo tank 2 with the picked-up thermal insulation cover 4, the main control module of the manipulator device 1 executes the program to implement the method for locating the center of the tank opening of the torpedo tank 2 in this embodiment 2, thereby determining the center of the tank opening 21 of the torpedo tank 2.

By adopting the method for locating the center of the thermal insulation cover 4 of embodiment 1, the center of the thermal insulation cover 4 can be accurately located before picking up the thermal insulation cover 4, so that the manipulator device 1 can accurately pick up the center of the thermal insulation cover 4. This prevents the center of gravity of the picked-up thermal insulation cover 4 from shifting, ensuring that the manipulator device 1 reliably picks up the thermal insulation cover 4.

By adopting the method for locating the center of the tank opening in embodiment 2, the center of the tank opening 21 of the torpedo tank 2 can be accurately located before the tank opening 21 of the torpedo tank 2 is covered with the thermal insulation cover 4, so that the manipulator device 1 can accurately cover the tank opening 21 of the torpedo tank 2 with the picked-up thermal insulation cover 4, thereby avoiding the situation that the tank opening 21 of the torpedo tank 2 cannot be completely covered with the thermal insulation cover 4, and avoiding the situation that the thermal insulation cover 4 falls abnormally.

In addition, in the method for locating the center of the thermal insulation cover of the torpedo tank in embodiment 1, the coordinate data of four points are obtained by scanning the thermal insulation cover 4, and in the method for locating the center of the tank opening of the torpedo tank in embodiment 2, the coordinate data of four points are also obtained by scanning the tank opening 21 of the torpedo tank 2. The coordinate data of the center of the thermal insulation cover 4 and the center of the tank opening 21 of the torpedo tank 2 can be determined only based on the coordinate data of these eight points. The amount of data processing is very small, the implementation is simple and convenient, and the data processing speed is also fast.

It should be noted that the present invention does not limit the shape of the thermal insulation cover 4 and the tank opening 21 of the torpedo tank 2, such as the circular shape in this embodiment 1 and this embodiment 2, or other shapes. Both can be scanned by a contour scanning instrument, such as a two-dimensional laser radar 5, and the center position of the thermal insulation cover 4 and the tank opening 21 of the torpedo tank 2 can be determined according to the scanned coordinate points.

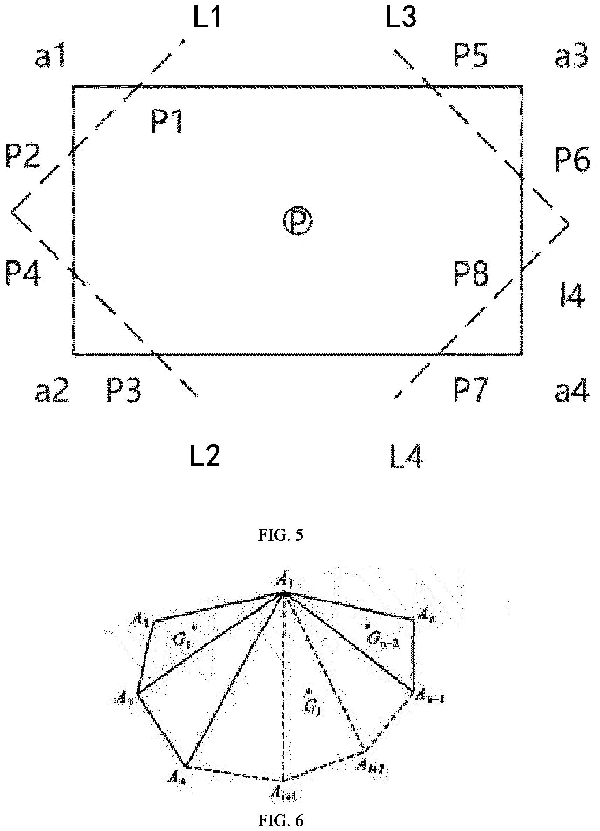

The method for confirming the center position of the thermal insulation cover 4 and the tank opening 21 of the torpedo tank 2 is briefly described below when the shape of the thermal insulation cover 4 and the tank opening 21 of the torpedo tank 2 is a shape other than a circle, such as a rectangle as shown in FIG. 5 or an arbitrary shape as shown in FIG. 6.

For example, referring to FIG. 5, in conjunction with FIG. 1, the setting position and implementation steps of the two-dimensional laser radar 5 are the same as those of the embodiment 1. The only difference is the method used to determine the center of the thermal insulation cover 4 of the torpedo tank 2 in step S3. Specifically, when the shape of the thermal insulation cover 4 of the torpedo tank 2 in FIG. 1 is a rectangle as shown in FIG. 5, the two-dimensional laser radar 5 is used to scan four times along the dotted line shown in FIG. 5, and four scanning lines L1, L2, L3, and L4 are obtained respectively.

The L1 scanning line and the contour edge of the rectangle intersect at points P1 and P2, the L2 scanning line and the contour edge of the rectangle intersect at points P3 and P4, the L3 scanning line and the contour edge of the rectangle intersect at points P5 and P6, the L4 scanning line and the contour edge of the rectangle intersect at points P7 and P8, the two points P2 and P4 determine the straight line L_{P2P4}, the points P3 and P7 determine the straight line L_{P3P7}, the points P1 and P5 determine the straight line L_{P1P5}, and the points P6 and P8 determine the straight line L_{P6P8}.

The intersection point of the extension line of the straight line L_{P2P4} and the extension line of the straight line L_{P3P7} is a2, the intersection point of the extension line of the straight line L_{P2P4} and the extension line of the straight line L_{P1P5} is a1, the intersection point of the extension line of the straight line L_{P6P8} and the extension line of the straight line L_{P1P5} is a3, and the intersection point of the extension line of the straight line L_{P6P8} and the extension line of the straight line L_{P3P7} is a4. Straight lines Lₐ₁ₐ₄ and Lₐ₂ₐ₃ are constructed, and the intersection point of the two straight lines is the center point P of the rectangular tank opening.

After the center of the thermal insulation cover 4 of the torpedo tank 2 is confirmed, the center of the tank opening 21 of the torpedo tank 2 is confirmed. When the shape of the tank opening 21 of the torpedo tank 2 in FIG. 1 is a rectangle as shown in FIG. 5, the setting position and implementation steps of the two-dimensional laser radar 5 are the same as those of embodiment 2. The only difference lies in the method used in step S3 to determine the center of the tank opening 21 of the torpedo tank 2, and this method for determining the center of the tank opening 21 of the torpedo tank 2 is the same as the method for confirming the center of the thermal insulation cover 4 of the torpedo tank 2. Details are not repeated herein. For example, referring to FIG. 6 and FIG. 1, the setting position and implementation steps of the two-dimensional laser radar 5 are the same as those of embodiment 1, and the only difference lies in the method used in step S3 to determine the center of the thermal insulation cover 4 of the torpedo tank 2.

Specifically, when the shape of the thermal insulation cover 4 of the torpedo tank 2 is any shape as shown in FIG. 6, the thermal insulation cover 4 of the torpedo tank 2 is scanned by the two-dimensional laser radar 5. Assuming that the scanning is performed once every angle α, the coordinates (x, y) of the two endpoints of the single scanning line segment are obtained. Assuming that the two-dimensional laser radar 5 is rotated clockwise, the adjacent endpoints are connected by a broken line in a clockwise or counterclockwise direction, and the contour map composed of the scanned point cloud of the thermal insulation cover 4 of the torpedo tank 2 can be obtained, and A1 to An are the coordinate points of the contour edge point cloud.

The center point position of the thermal insulation cover 4 of the torpedo tank 2 can be obtained by calculation by the following algorithm. The method for determining the center of the thermal insulation cover 4 of the torpedo tank 2 in step S3 is based on Theorem 1 for calculating the centroid of the contour section and Theorem 2 for the area of the contour section.

Specifically, Theorem 1 is the vertex coordinates Ai ( xi, yi ) ( i =1, 2, 3) of the known triangle △A1A2A3. Its centroid coordinates are xc = (x1+x2+x3) / 3; yc = (y1+y2+y3) / 3 Theorem 2 is the vertex coordinates Ai (xi, yi) (i = 1, 2, 3) of the known triangle △A1A2A3. The area of the triangle is S = ((x2 - x1) * (y3 -y1) - (x3 - x1) * (y2 -y1)) / 2.

Wherein, when the boundary of △A1A2A3 forms a counterclockwise loop, + is taken, and when the boundary of △A1A2A3 forms a clockwise loop, - is taken. In the process of solving, it is not necessary to consider whether the input order of the points is clockwise or counterclockwise, and the effect caused by the input order is cancelled out after division.

As shown in FIG. 6, starting from point A1, the contour plane of the thermal insulation cover 4 of the torpedo tank 2 is divided into a figure composed of n-2 triangles by adjacent points along the clockwise or counterclockwise direction.

First, solve the area and centroid of each triangle:
Suppose the centroid of one triangle is G (cx, cy), and the vertex coordinates are A1 (x1, y1), A2 (x2, y2), and A3 (x3, y3), then cx = (x1+x2+x3) / 3; cy = (y1+y2+y3) / 3;
The area is S = ( (x2 - x1) * (y3 - y1) - (x3 - x1) * (y2 - y1)) / 2;
Then solve the centroid of the polygon:
   Formula: cx = (Σ cx[i]*s[i]) / Σs[i]; cy = (Σ cy[i]*s[i]) / Σs[i]; where (cx[i], cy[i]), and s[i] are the centroid coordinates and area of the i^{th} triangle divided. In addition, it is not actually necessary to divide by 3 when calculating the coordinates of each triangle. It is only necessary to calculate Σ cx[i]*s[i] and then divide the result by 3 at one time.

The position of the centroid is the center position of the thermal insulation cover 4 of the torpedo tank 2.

After the center of the thermal insulation cover 4 of the torpedo tank 2 is confirmed, the center of the tank opening 21 of the torpedo tank 2 is confirmed. The setting position and implementation steps of the two-dimensional laser radar 5 are the same as those of the embodiment 2. The only difference lies in the method used in step S3 to determine the center of the tank opening 21 of the torpedo tank 2, and this method for determining the center of the tank opening 21 of the torpedo tank 2 is the same as the method for confirming the center of the thermal insulation cover 4 of the torpedo tank 2. Details are not repeated herein.

It should be noted that the shape of the thermal insulation cover 4 of the torpedo tank 2 may be inconsistent with the shape of the tank opening 21 of the torpedo tank 2. In this case, the corresponding center locating method can be selected according to the specific shape.

The above are only preferred embodiments of the present invention and are not intended to limit the protection scope of the present invention. Therefore, any modifications, equivalent substitutions, improvements, etc. made within the spirit and principles of the present invention should be included in the protection scope of the present invention.

## Claims

1. A method for locating the center of a thermal insulation cover of a torpedo tank, wherein a manipulator device (1) is arranged beside a transportation line of a torpedo tank car, and the manipulator device (1) has a movable cantilever (11); wherein the method for locating the center of a thermal insulation cover of a torpedo tank comprises:
S1, arranging a contour scanning instrument on the cantilever (11) of the manipulator device (1);
S2, controlling the contour scanning instrument to perform scanning on the thermal insulation cover (4) of the torpedo tank, and obtaining coordinate positions of three or more points on a circumferential contour of the thermal insulation cover (4) of the torpedo tank; and
S3, determining a coordinate position of the center of the thermal insulation cover (4) of the torpedo tank according to the obtained coordinate positions of the points on the circumferential contour of the thermal insulation cover (4) of the torpedo tank.

2. The method for locating the center of a thermal insulation cover of a torpedo tank according to claim 1, wherein the contour scanning instrument is a two-dimensional laser radar (5).

3. The method for locating the center of a thermal insulation cover of a torpedo tank according to claim 2, wherein a line scanning plane of the two-dimensional laser radar (5) is perpendicular to a horizontal plane.

4. The method for locating the center of a thermal insulation cover of a torpedo tank according to claim 1, wherein: in S2, the scanning performed on the thermal insulation cover (4) of the torpedo tank by the contour scanning instrument is off-center scanning performed for two times in different directions, coordinate positions of two points on the circumferential contour of the thermal insulation cover (4) of the torpedo tank are obtained by performing off-center scanning each time, and coordinate positions of four points on the circumferential contour of the thermal insulation cover (4) of the torpedo tank are obtained by performing off-center scanning for two times.

5. The method for locating the center of a thermal insulation cover of a torpedo tank according to claim 1, wherein: in S3, the coordinate position of the center of the thermal insulation cover (4) of the torpedo tank is determined according to a double chord circle center determining method.

6. A method for locating the center of a tank opening of a torpedo tank, wherein a manipulator device (1) is arranged beside a transportation line of a torpedo tank car, and the manipulator device (1) has a movable cantilever (11); wherein the method for locating the center of a tank opening of a torpedo tank comprises:
S1, arranging a contour scanning instrument on the cantilever (11) of the manipulator device (1);
S2, controlling the contour scanning instrument to scan the tank opening (21) of the torpedo tank, and obtaining coordinate positions of three or more points on the circumferential contour of the tank opening (21) of the torpedo tank; and
S3, determining a coordinate position of the center of the tank opening (21) of the torpedo tank according to the obtained coordinate positions of the points on the circumferential contour of the tank opening (21) of the torpedo tank.

7. The method for locating the center of a tank opening of the torpedo tank according to claim 6, wherein the contour scanning instrument is a two-dimensional laser radar (5).

8. The method for locating the center of a tank opening of a torpedo tank according to claim 7, wherein a line scanning plane of the two-dimensional laser radar (5) is perpendicular to a horizontal plane.

9. The method for locating the center of a tank opening of a torpedo tank according to claim 6, wherein: in S2, the scanning of the tank opening (21) of the torpedo tank by the contour scanning instrument is off-center scanning performed for two times in different directions, coordinate positions of two points on the circumferential contour of the tank opening (21) of the torpedo tank are obtained by performing off-center scanning each time, and coordinate positions of four points on the circumferential contour of the tank opening (21) of the torpedo tank are obtained by performing off-center scanning for two times.

10. The method for locating the center of a tank opening of a torpedo tank according to claim 6, wherein: in S3, a coordinate position of the center of the tank opening (21) of the torpedo tank is determined according to a double chord circle center determining method.
